Europäisches Patentamt

European Patent Office

Office européen des brevets

(11) Publication number: **0 281 203 B1**

# EUROPEAN PATENT SPECIFICATION

(45) Date of publication of patent specification: **11.12.91** (51) Int. Cl.⁵: **F16B 25/00**

(21) Application number: **88200385.8**

(22) Date of filing: **01.03.88**

(54) **Improved screw.**

(30) Priority: **06.03.87 IT 1961487**

(43) Date of publication of application:
**07.09.88 Bulletin 88/36**

(45) Publication of the grant of the patent:
**11.12.91 Bulletin 91/50**

(84) Designated Contracting States:
**AT BE CH DE ES FR GB GR IT LI LU NL SE**

(56) References cited:
**DE-C- 52 742**
**DE-C- 54 903**
**GB-A- 251 409**
**US-A- 3 861 269**

(73) Proprietor: **KILTON S.R.L.**
**Via Sardegna, 64**
**I-20090 Fizzonasco di Pieve Emanuele**
**(Milano)(IT)**

(72) Inventor: **Chiello, Luigi**
**Via Sardegna, 64 I-20090**
**Fizzonasco Di Pieve Emanuele Milano(IT)**

(74) Representative: **Riccardi, Sergio**
**Riccardi & Co. Via Macedonio Melloni, 32**
**I-20129 Milano(IT)**

Rank Xerox (UK) Business Services

## Description

The invention relates to an improved screw with a special structure which constitutes an enormously important technological advance in all screw application sectors and, in particular, in those industrial sectors involved in mass production with mounting and assembling lines where it is essential to respect programmed times.

It is a known fact that it takes a disproportionately long time to apply a screw if one considers the small size of the piece and the considerable number of screws which are needed to mount any component of manufactured products. Therefore, in theory, a large number of people or robots must be employed simply to apply the inumerable screws which are necessary for any mounting or assembly operation or we must resign ourselves to extending the times in order to allow people or robots to apply all the screws which are necessary.

Therefore, attempts have been made to produce high-speed tools to reduce the screwing time which is required but it was then realised that the screws which existed would not support such high speeds and, therefore, the aforementioned tools had to be operated at a much lower speed than they were capable of. In addition, a large number of the existing screws have their threads stripped during application and thus screws in existing use cannot be guaranteed to hold and, as everyone knows, after a brief period of use of any article the screws begin to loosen, to fall out, to get lost and thus the article in question needs to be repaired or serviced and sometimes even to be thrown away.

Some very old patents (DE-C-52742 and DE-C-54903 of one hundred years ago, GB-A-251,409 filed in the year 1925) disclose wood screws provided with one or more auxiliary threads, but there are no indications about the parameters to be used and it is clear that these constructions cannot be used with modern hard materials nor be applied at high speed.

More particularly, DE-C-52742 discloses a wood screw with an intermediate auxiliary thread having substantially the same diameter of the main thread as its only purpose is to increase the holding force in the wood structure at the point of the screw.

US-A-3,861,269 discloses a self-tapping screw adapted to be used on relatively soft materials and provided with an auxiliary thread, preferably on the shank portion. However, it is clear from the drawings that said auxiliary thread has the same diameter as the main thread when extending to the tip portion and the threads do not originate from the tip end. This construction is not suitable for application on hard materials and the provision of threads of the same diameter causes serious problems of overheating and difficulty of discharging the shavings which are held compressed between the thread turns, thus rendering said screw unsuitable for high speed applications.

The screws disclosed in said prior art literature do not combine the features of the hardened steel screw of the present invention with the two threads starting at the tip and proceeding upwardly with one continuing on to the main shaft to become the main thread, or with the preferred dimensions presented in the dependent claims which make them especially suitable for the above-described advantageous purposes.

Thus, the importance is obvious, in practical and economic terms, it is obviously important to have a screw available which give maximum guarantees of holding power, that does not strip its thread during application, that can be applied at high speed with existing modern tools and that can advantageously replace exisiting screws, particularly self-drilling screws with drill points, together with all other types of screws in industrial use.

These problems are solved by the screw of the present invention which is a self-tapping screw : as disclosed in claim 1.

Preferred embodiments of the invention are recited in dependent Claims 2-5.

The above-mentioned problems are brilliantly and completely solved by the improved screw of this invention which can certainly be considered revolutionary because of its enormous effect in all sectors in which large numbers of screws must be applied in industrial productions processes, where the reduction of the time taken to apply one single screw, multiplied by the number of screws required, will obviously produce incredibly high time savings and, therefore, cost savings. In addition, this is combined with improved holding performance, no thread stripping, reliability and long life.

The invention is constituted by the application or construction of a second thread which is intermediate to the conventional thread, more or less accentuated according to the individual case, which is inserted in the conical or frusto-conical tip portion of the screw of this invention.

The improvement proposed in this invention relates to all standard and special manufactured screws with or without a point and to all possible similar products in production at present or to be produced in the future, to which this system can be applied.

Screws which have been provided with this intermediate second thread can be used in all sectors which utilise plastic materials and derivates, timber and derivates, metal laminates and derivates, both ferrous and non-ferrous, the building industry or sectors with various and mixed applications of the aforementioned materials, starting from the thinnest up to medium or thick thicknesses.

Compared to normal means of fastening and assembly, the screws of this invention have the following advantages:

(1) Possibility of high speed screwing.
(2) Screwing with reduced torque effort.
(3) Improved holding performance.
(4) Improved holding torque.
(5) Improved unscrewing torque.
(6) No need for preliminary drilling.

Another basic advantage of these screws is that the material can be drawn before and during the drilling and thus there is a greater holding surface.

The improved screws provided with this factor, and thus having the advantages listed above, can replace all self-tapping screws and multi-start screws.

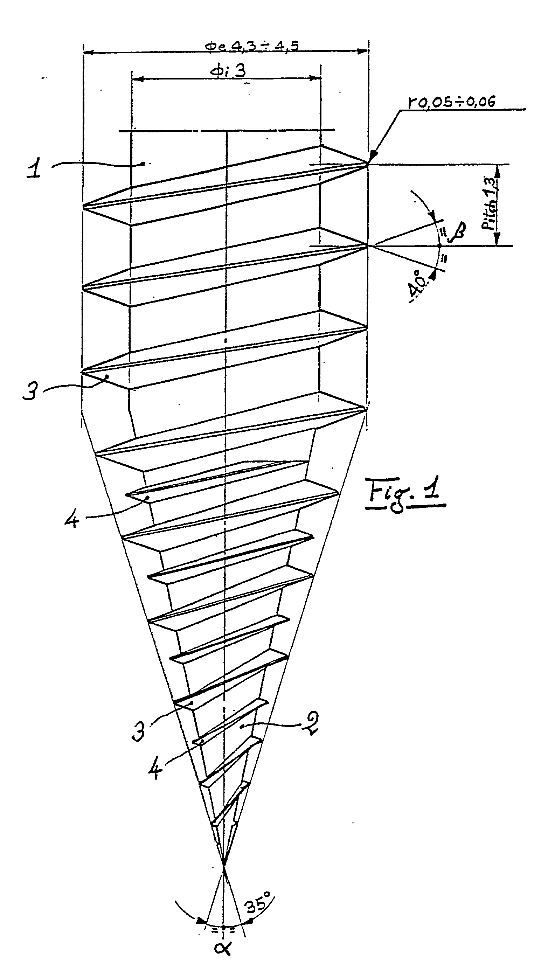

The objects, characteristics and advantages of the improved screws of this invention are clearly demonstrated in the attached drawing which shows one of the innumerable possible embodiments, in which Figure 1 is enlarged front view of the aforementioned embodiment, with some typical parameters given in millimetres.

In the drawings, reference number 1 is the shaft portion of the screw, 2 is the tip portion, 3 is the first thread and 4 is the second, intermediate thread.

The screw illustrated in Figure 1 is particularly suitable for sectors which use fine and medium thick metal sheets (0.1 to 1.5 mm), in which electrical, pneumatic, electropneumatic and hydraulic screwing tools are used or manual-automatic or production line machines or tools are used and on metal sheets 1.5 mm thick or more when screws are applied by means of automatic cycle screwing equipment (automatic line screwing machines with manual feed or servo-feed).

The diameter of the intermediate thread must not be greater than the diameter of the shaft portion of the screw to which the system is applied.

In cases in which there are very special utilisation requirements, the diameter of the intermediate thread can also be greater than the diameter of the tip portion of the improved screw, and extend up to two-thirds of the total length of the screw itself. In this way the thread actually encroaches on the cylindrical part of the shaft and will have a variable diameter which is larger than that of the shaft core.

The angle $\beta$ of the thread can vary from 30° up to 65° according to the application. The pitch can vary from 0.5 mm to 15 mm according to the diameter of utilisation and the type of application. The radius r of the tip of the thread can be between 0.1 mm and 5 mm.

The nominal diameters $\phi$ of the improved screws which can be produced can be from 1 mm to 50 mm and the lengths can be from 1 mm to 1,000 mm. The cone angle or angle of inclination $\alpha$ of the apex of the pointed screws can vary from 18° to 90° and that of the screws with a frusto-conical point can vary from 4° to 90°.

The improved screws of this invention can be manufactured from ferrous and non-ferrous materials and their derivates. The possible thermal treatments which can be used are carbonitriding, the various hardening and tempering systems and all the other thermal treatments used in this technological field.

The example illustrated in Figure 1 is only one of the vast variety of possible solutions for all types of applications, bearing in mind what has just been said about the very wide range of possible variations of all the parameters. i.e. pitch, angle of thread, radius of the thread tip, nominal diameter, angle of inclination of the apex, screw length and material employed.

## Claims

1. Self-tapping screw : suitable for application with high speed tools, comprising: a shaft portion (1) and a conical or frusto conical tip portion (2) axially aligned therewith, both of hardened steel; a first continuous helical thread (3) formed integrally with said screw and extending from the tip end of said tip portion (2) along said tip portion (2) onto and along said shaft portion (1); a second continuous helical thread (4) formed integrally with said screw and extending along said tip portion (2) from said tip end, substantially midway between the courses of said first thread (3), : the height of the second thread being substantially less than the respective heights of the first thread portions flanking said second thread.

2. Screw according to Claim 1, characterized in that said first thread (3) has a thread angle ($\beta$) of from about 30° to 65°, said tip portion (2) has a cone angle ($\alpha$) of about 4° to 90°, and said first thread (3) has a pitch of about 0.5 to 15 mm, said second thread (4) being limited to said tip portion (2).

3. Screw according to Claim 1, characterized in that said screw is of hardened forged steel, and said tip portion (2) has a cone angle ($\alpha$) of approximately 35°.

4. Screw according to one or more of the preceding claims, characterised in that the radius (r) of the tip of the thread can vary from 0.1 mm to 5 mm.

**5.** Screw according to one or more of the preceding claims, characterised in that the nominal diameter ($\phi$) of the screw can vary from 1 to 50 mm.

## Revendications

**1.** Vis auto-taraudeuse, appropriée pour l'application par des outils fonctionnant à grande vitesse, comprenant une partie de tige (1), et une partie de pointe (2) conique ou tronconique, alignée axialement avec cette dernière, les deux parties étant fabriquées en acier trempé; un premier filetage hélicoidal (3) continu, formé monobloc avec ladite vis et s'étendant à partir de l'extrémité de pointe de ladite partie de pointe (2), le long de cette dernière, sur et le long de ladite partie de tige (1); un second filetage hélicoidal (4) continu, formé monobloc avec ladite vis, et s'étendant le long de ladite partie de pointe (2), à partir de ladite partie d'extrémité, sensiblement à mi-chemin entre les spires dudit premier filetage (3) la hauteur du second filetage étant sensiblement inférieure aux hauteurs respectives des premières parties de filetage, adjacentes audit second filetage.

**2.** Vis selon la revendication 1, caractérisée en ce que ledit premier filetage (3) présente un angle d'hélice de filetage (b) d'environ 30° à 65°, ladite partie de pointe (2) présente un angle de cône (a) d'environ 4° à 90°, et ledit premier filetage (3) présente un pas d'environ 0,5 à 15 mm, ledit second filetage (4) étant limité à ladite partie de pointe (2).

**3.** Vis selon la revendication 1, caractérisée en ce que ladite vis est fabriquée en acier forgé trempé, et ladite partie de pointe (2) présente un angle de cône (a) d'environ 35°.

**4.** Vis selon l'une ou plusieurs des revendications précédentes, caractérisée en ce que le rayon (r) de la pointe du filetage peut varier de 0,1 mm à 5 mm.

**5.** Vis selon l'une ou plusieurs des revendications précédentes, caractérisée en ce que le diamètre nominal (j) de la vis peut varier de 1 à 50 mm.

## Patentansprüche

**1.** Selbstschneidende, für die Verwendung von Hochgeschwindigkeitswerkzeugen geeignete Schraube, die folgendes aufweist: einen Schaftteil (1) und einen konischen oder kegelstumpfartigen Spitzenteil (2), der damit axial fluchtet, beide aus gehärtetem Stahl; ein erstes fortlaufendes helixartiges Gewinde (3), das einstückig mit der Schraube gebildet ist, und sich von dem Spitzenende des Spitzenteils (2) längs dieses Spitzenteils (2) auf und entlang diesem Schaftteil (1) erstreckt; ein zweites fortlaufendes helixartiges Gewinde (4), das einstückig mit der Schraube gebildet ist und sich längs dieses Spitzenteils (2) von dem Spitzenende im wesentlichen auf halbem Wege zwischen den Umläufen des ersten Gewindes (3) erstreckt, wobei die Höhe des zweiten Gewindes wesentlich geringer ist als die jeweiligen Erhöhungen an den ersten Gewindeteilen, die das zweite Gewinde flankieren.

**2.** Schraube nach Anspruch 1, dadurch gekennzeichnet, daß das erste Gewinde (3) einen Gewindewinkel ($\beta$) von etwa 30° bis 65° hat, das Spitzenteil (2) einen Kegelwinkel ($\alpha$) von etwa 4° bis 90° hat, und das erste Gewinde (3) eine Steigung von etwa 0,5 bis 15 mm hat, wobei das zweite Gewinde (4) auf den Spitzenteil (2) begrenzt ist.

**3.** Schraube nach Anspruch 1, dadurch gekennzeichnet, daß die Schraube aus gehärtetem geschmiedetem Stahl besteht und der Spitzenteil (2) einen Konuswinkel ($\alpha$) von ungefähr 35° hat.

**4.** Schraube nach einem oder mehreren der vorhergehenden Ansprüche, dadurch gekennzeichnet, daß der Radius (r) der Gewindespitze von 0,1 mm bis 5 mm variieren kann.

**5.** Schraube nach einem der mehreren der vorhergehenden Ansprüche, dadurch gekennzeichnet, daß der Nenndurchmesser ($\phi$) der Schraube von 1 bis 50 mm variieren kann.

Fig. 1